(19) **Europäisches Patentamt / European Patent Office / Office européen des brevets**

(11) **EP 1 759 752 A1**

(12) **EUROPEAN PATENT APPLICATION**
published in accordance with Art. 158(3) EPC

(43) Date of publication:
07.03.2007 Bulletin 2007/10

(51) Int Cl.:
*B01D 25/12* (2006.01)

(21) Application number: **05728877.1**

(86) International application number:
**PCT/JP2005/006629**

(22) Date of filing: **05.04.2005**

(87) International publication number:
**WO 2005/097288 (20.10.2005 Gazette 2005/42)**

(84) Designated Contracting States:
**DE FR GB**

(30) Priority: **07.04.2004 JP 2004113624**
**09.02.2005 JP 2005032615**
**01.03.2005 JP 2005055399**

(71) Applicant: **Tofuku Shoji Yuugen Kaisya**
**Tokyo**
**2020002 (JP)**

(72) Inventor: **HOYA, Takeshi**
**Tokyo 1880011 (JP)**

(74) Representative: **TBK-Patent**
**Bavariaring 4-6**
**80336 München (DE)**

(54) **FILTER PLATE OF FILTER PRESS AND METHOD OF MANUFACTURING THE SAME**

(57)     A filter plate is for use in a filter press for filtrating a substance such as sludge. The filter plate comprises: a main body having a supply hole through which the sludge is supplied into a filtrating chamber defined between the filterplate and another filter plate adjacent thereto; frames welded onto both sides of the main body; a plurality of spacers welded onto both sides of the main body; an elastic cover covering the frames and the spacers; and a filter cloth for filtrating the sludge force-fed into the filtrating chamber. The filter press is provided with a plurality of filter plates having a configuration as described above. When filtrating the sludge, the filter plates are stacked together and clamped against each other so that filtrating chambers are defined between adj acent filter plates . During the clamping of the filter plates, tips of the covered spacers provided on the filter plate abut tips of covered spacers on the adj acent filter plate through the intermediation of the filter cloth, respectively.

**Fig. 3**

EP 1 759 752 A1

## Description

### FIELD OF THE INVENTION

The present invention relates to a filter plate for use in a filter press and to a method of manufacturing the same.

### BACKGROUND OF THE INVENTION

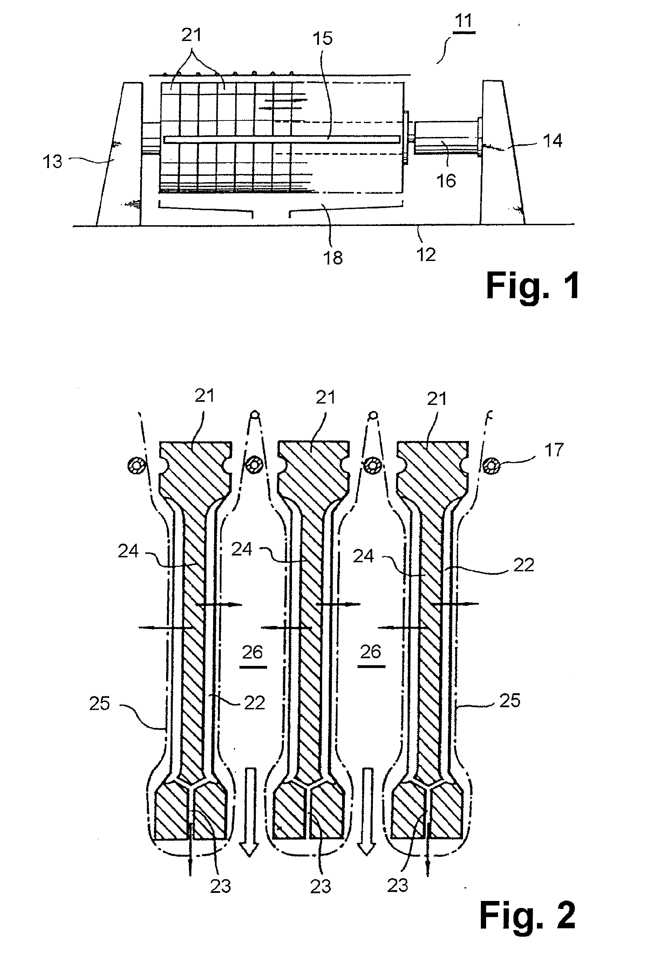

In recent years, there is a tendency toward a significant increase in an amount of sludge generated resulting from treatment of various kinds of organic wastewater. When such the sludge is disposed of as it is, underground water, rivers, etc. will be seriously contaminated. Thus, from a viewpoint of preventing environmental contamination, an attempt has been made to separate sludge into solid dehydrated cakes and a filtrate. The dehydrated cakes obtained through the separation are recycled, or are burned and used for reclamation. The filtrate is, for example, rendered harmless and then released into rivers or sea. As an apparatus for dehydrating a substance to be dehydrated, such as sludge, there is used a filter press (pressure filtering apparatus / solid-liquid separation apparatus) as shown in Figs. 1 and 2.

In the following, a conventional filter press will be described with reference to Figs. 1 and 2. Fig. 1 is a view showing an outward appearance of a conventional filter press 11. Fig. 2 is a sectional view showing filter plates with which the filter press 11 in Fig. 1 is equipped.

In the filter press 11 shown in Fig. 1, a pair of stands 13, 14 are arranged upright on a base 12. Between the stands 13 and 14, a plurality of iron filter plates 21 are provided so as to be opposed to each other. The filter plates 21 are provided so as to be slidable in an approaching direction and a separating direction along guide rails 15. As shown in Fig. 2, each filter plate 21 has a main body 24 in which guide grooves 22 and a liquid discharge port 23 are formed. As shown in this figure, the main body 24 is covered with a filter cloth 25 for filtrating sludge.

In filtrating sludge, a plurality of filter plates 21 are stacked together using a hydraulic cylinder 16 provided on the stand 14 side; further, the filter plates are clamped against each other. Then, sludge is force-fed under high pressure through supply ports 17 to filtrating chambers 26 defined between the adj acent filter plates 21. Since high pressure is applied through the supply ports 17 to the sludge filling the filtrating chambers 26, the sludge in the filtrating chambers is filtrated by the filter cloths 25. As a result, the sludge is separated into dehydrated cakes and a filtrate.

The filtrate having passed through the filter cloths 25 is guided to the liquid discharge ports 23 through the guide grooves 22 of the filter plate bodies 24. The filtrate discharged through the liquid discharge ports 23 is accommodated in a predetermined portion through a chute 18. On the other hand, the dehydrated cakes remaining in the filtrating chambers 26 between the filter plates 21 are peeled from the filter cloths 25 and caused to fall by its own weight by separating the plurality of filter plates 21 from each other.

However, the filter plates of the filter press described above have the following problems.

To filtrate "the substance to be dehydrated" such as sludge using the filter press, it is necessary to clamp the filter plates against each other with a high pressure, and to force-feed the substance into the filtrating chambers under a high pressure. Thus, the mainbodies of the filterplates must have a level of rigidity high enough to withstand the high pressure.

Thus, in the conventional filter plate, a large plate thickness and a large weight are involved from a viewpoint of achieving an enhancement in rigidity. Further, due to the large weight, a large force is required to slide a large number of filter plates. Further, as a result of the increase in the weight and thickness of the filter plates, the filter press having a plurality of conventional filter plates is rather large and expensive.

In view of the above-mentioned problems, it is an obj ect of the present invention to provide a filter plate and a method of manufacturing the same allowing manufacturing of a lightweight and compact filter press at low cost.

### SUMMARY OF THE INVENTION

In order to achieve the above object, the present invention is directed to a filter plate and a manufacturing method thereof as described in the following Item (1) - (22).

(1) A filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adjacent filter plates, the filter plate comprising:

a main body having a supply hole through which the substance is supplied into a filtrating chamber defined between the filter plate and another filter plate adjacent thereto;
a frame provided at a peripheral edge portion of the main body;
a plurality of spacers provided on the main body at the inner side of the frame;
a cover formed of an elastic material which is provided so as to cover at least the plurality of spacers;
a filter cloth for filtrating the substance which has been force-fed into the filtrating chamber through the supply hole, wherein tips of the covered spacers provided on the filter plate abut tips of covered spacers on the adjacent filter plate through the intermediation of the filter cloth, respectively, during the clamping of the filter plates; and

at least one discharge passage for discharging a filtrate passed through the filter cloth to the outside of the filter plate.

(2) The filter plate as described in Item (1), wherein a number of spacers to be provided on the main body is determined by a formula of $N > P/(E \cdot A)$, in the formula:

N: the number of spacers to be provided on one side of the main body;
P: pressure (kgf) in a clamping direction to be applied to the filter plate at the time of clamping;
E: elastic modulus ($kgf/cm^2$) of the cover to be formed on the top of each spacer; and
A: area ($cm^2$) of the cover to be formed on the top of each spacer.

(3) The filter plate as described in Item (1), wherein:

each of the spacer is formed into a cylinder or a truncated cone shape whose upper surface has a diameter of approximately 3 cm - 5 cm;
the cover is formed of urethane having a hardness of 95;
each spacer is covered with the urethane so that the cover lying on the top thereof has elastic modulus of approximately 2800 $kgf/cm^2$; and
a number of spacers to be provided on the main body is determined by a formula of $N > P/(2800 \cdot A)$, in the formula:
N: the number of spacers to be provided on one side of the main body;
P: pressure (kgf) in a clamping direction to be applied to the filter plate at the time of clamping;
A: area ($cm^2$) of the cover to be formed on the top of each spacer.

(4) The filter plate as described in Item (1), wherein the plurality of spacers provided inside the frame are arranged over the entire surface of the main body at substantially equal intervals.

(5) The filter plate as described in Item (1), wherein the frame and the plurality of spacers are welded onto the main body.

(6) The filter plate as described in Item (5), wherein the main body is formed into a substantially square shape, and the frame is formed by assembling together four rods having a same configuration.

(7) The filter plate as described in Item (1), wherein the cover is provided so as to cover the main body and the frame in addition to the plurality of spacers.

(8) The filter plate as described in Item (7), wherein the cover is provided such that rising and falling portions thereof have a curved surface.

(9) The filter plate as described in Item (7), wherein the cover is provided through press working.

(10) The filter plate as described in Item (7), wherein the filter plate further comprises an O-ring for securing hermeticity of the filtrating chamber during the clamping of the filter plates, the O-ring being arranged on the cover above the frame so as to extend along the frame.

(11) The filter plate as described in Item (7), wherein the frame is formed such that an inner edge portion thereof has a sloping or curved surface, and each of the spacers is formed such that a peripheral edge portion thereof has a sloping or curved surface.

(12) The filter plate as described in Item (11), wherein the O-ring extending along the frame is arranged on the cover so as to be situated above the inner edge portion of the frame having the sloping or curved surface.

(13) The filter plate as described in Item (7), wherein the discharge passage is formed by cutting out an end of the main body, and in the discharge passage there is embedded a hard tube for preventing the cover from sinking into the discharge passage.

(14) The filter plate as described in Item (7), wherein the cover is provided on both sides of the main body so as to be continuous through the supply hole of the main body.

(15) The filter plate as described in Item (1), wherein the cover includes a reinforcing member for reinforcing the cover.

(16) A filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adj acent filter plates, the filter plate comprising:

a main body having a supply hole through which the substance is supplied into a filtrating chamber defined between the filter plate and another filter plate adjacent thereto;
a frame provided so as to surround the periphery of the main body;
a plurality of spacers provided on the main body;
a cover formed of an elastic material which is provided so as to cover at least the plurality of spacers;
a filter cloth for filtrating the substance which has been force-fed into the filtrating chamber through the supply hole, wherein tips of the covered spacers provided on the filter plate abut tips of covered spacers on the adjacent filter plate through the intermediation of the filter cloth, respectively, during the clamping of the filter plates; and
at least one discharge passage for discharging a filtrate passed through the filter cloth to the outside of the filter plate.

(17) The filter plate as described in Item (16), wherein a number of spacers to be provided on the main body is determined by a formula of $N > P/(E \cdot A)$, in the formula:

N: the number of spacers to be provided on one side of the main body;
P: pressure (kgf) in a clamping direction to be applied to the filter plate at the time of clamping;
E: elastic modulus (kgf/cm$^2$) of the cover to be formed on the top of each spacer; and
A: area (cm$^2$) of the cover to be formed on the top of each spacer.

(18) The filter plate as described in Item (16), wherein the cover is provided so as to cover the main body, the frame and the plurality of spacers.

(19) The filter plate as described in Item (16), wherein the cover is provided on both sides of the main body so as to be continuous through the supply hole of the main body.

(20) The filter plate as described in Item (16), wherein the cover includes a reinforcing member for reinforcing the cover.

(21) A method of manufacturing a filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adjacent filter plates, the method comprising the steps of:

preparing a main body having a plate-like shape;
welding a first frame onto a peripheral edge portion of one side of the main body;
welding a second frame onto a peripheral edge portion of the other side of the main body, so that the first and second frames are opposed to each other with the main body being sandwiched therebetween;
welding a first set of spacers onto the one side of the main body so as to be arranged at the inner side of the first frame;
welding a second set of spacers onto the other side of the main body so as to be arranged at the inner side of the second frame, so that the first and second sets of spaces are opposed to each other with the main body being sandwiched therebetween; and
providing a cover formed of an elastic material so as to cover at least the spacers provided onto the main body.

(22) A method of manufacturing a filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adjacent filter plates, the method comprising the steps of:

preparing a main body having a plate-like shape;
welding a frame onto the periphery of the main body so as to surround the main body;
welding a first set of spacers onto one side of the main body;
welding a second set of spacers onto the other side of the main body, so that the first and second sets of spaces are opposed to each other with the main body being sandwiched therebetween; and
providing a cover formed of an elastic material so as to cover at least the spacers provided onto the main body.

**EFFECTS OF THE INVENTION**

According to a filter press equipped with a plurality of filter plates as described in the above-mentioned Item (1) or (16), while the filter plates are stacked one upon the other, the tips of the covered spacers provided on one filter plate abut the tips of the covered spacers on the adjacent filter plate, respectively, through the intermediation of the filter cloths. Due to this feature, while the filter plates stacked together are being clamped against each other, a pressure acting on the filter plates is received by the abutting spacers. This makes it possible to reduce a thickness of the main body of each filter plate as compared with that in the prior art, and thus a total weight of the filter plates of the filter press is reduced. As a result, it becomes possible to manufacture a lightweight and compact filter press at a low cost.

Further, by covering the spacers with an elastic material, each spacer is prevented from corrosion and wear by the cover. In addition, since no bare-spacers abut each other through the intermediation of the filter cloths, the filter cloths are not broken by the spacers during the clamping of the filter plates.

Further, according to the filter press equipped with the filter plates as described in Item (1) or (16), it is possible to achieve the following superior effect.

First, if all the spacers are not covered, the spacers of the adjacent filter plates will directly abut each other through the intermediation of the filter cloths. Here, although it is desirable for all the spacers on the filter plates to have a uniform thickness (i.e., a uniform dimension in the height direction), there is, in actuality, some dimensional error between the spacers. Thus, in a case in which there is a difference in the thickness between the spacers, when the filter plates are clamped, the pressure applied at the time of clamping is concentrated on some spacers. This results in that the filter cloths suffer breakage.

In contrast, in the present invention, all the spacers are covered with the elastic material. Thus, even when there is some difference in the thickness between a plurality of bare spacers (i.e., uncovered spasers), the thickness of the spacers is adjusted to have uniformity by virtue of the covers. Thus, when the filter plates are clamped, a substantially uniform pressure is applied to all the spacers. Further, each spacer is covered with a material capable of elastic deformation, so the filter cloths interposed between the spacers opposed to each other suffer no breakage.

According to the present invention as described in the above-mentioned Item (2) or (17), the number of spacers to be provided on a main body of a filter plate is determined by the following formula <1>:

$$N > P/(E \cdot A) \quad \ldots <1>$$

where

N: the number of spacers to be provided on one side of the main body;
P: the pressure (kgf) in the clamping direction applied to the filter plate at the time of filtration ;
E: the elastic modulus (kgf/cm$^2$) of a portion of the cover which covers the upper portion of a spacer; and
A: the area (cm$^2$) of portion of the cover which covers the upper portion of a spacer.

By deciding the number of spacers to be provided in this manner, the filter plate is given an ability to withstand the pressure applied at the time of clamping.

According to the present invention as described in Item (3), urethane is used for a cover material for covering each spacer. The urethane has high tensile strength, high tear strength and high wear resistance as well as elasticity. Thus, it is possible to prevent breakage and wear of the spacers attributable to the high pressure applied at the time of clamping. In addition, using the urethane as a cover material, the filter plate is given impact resilience. Thus, after the completion of filtration, the dehydrated cakes are peeled and falls automatically due to the impact resilient force of the covers merely by separating the adjacent filter plates from each other. Further, according to the present invention, each spacer is formed so as to exhibit an upper surface (covered surface) having a diameter of approximately 3 cm - 5 cm. This makes it possible to prevent the covers from being damaged by the tips of the spacers at the time of clamping.

According to the present invention as described in Item (4), it is possible to prevent an extremely high pressure from being applied to a part of the main body at the time of clamping. Therefore, it is possible to prevent distortion and deformation of the filter plate.

According to the present invention as described in Item (5), it is possible to manufacture a filter plate at a lower cost as compared with the case in which a filter plate equipped with a main body, frames and spacers are integrally-molded.

According to the present invention as described in Item (6), a filter plate is produced at a lower cost as compared, for example, with a case inwhich a circular frame is provided on a circular main body.

According to the present invention as described in Items (7), (18), it is possible to prevent corrosion and wear of the spacers, the frames, and the main body. As a result, an improvement is achieved in terms of the service life of the filter plate.

According to the present invention as described in Item (8), the substance to be dehydrated can smoothly flow in the filtrating chambers, so that the filtrating chambers are completely filled with the fed substance. In addition, after the filtration, the dehydrated cakes remaining in the filtrating chambers are easily and completely peeled from the filter plates.

According to the present invention as described in Item (9), the cover is provided easily and quickly. Further, even in the case where the spacers has no uniformity in the thickness (i.e., the dimension in the height direction), all the spacers are adjusted so as to have uniform thickness by the cover provided through the press working. In addition, even if there are some asperities on the upper surfaces of the spacers, the cover given through the press working makes the upper surfaces substantially flat. As a result, it is possible to prevent breakage of the filter cloths interposed between the abutting spacers at the time of clamping.

According to the present invention as described in Item (10), it is possible to secure the hermeticity of the filtrating chambers at the time of clamping. As a result, the dehydration is effectively achieved on the substance which has been force-fed to the filtrating chambers.

According to the present invention as described in Item (11), it is possible to prevent the cover from being damaged by the edge portions of the frames and the spacers at the time of clamping.

According to the present invention as described in Item (12), the O-ring is arranged on a predetermined portion of the cover along the frame, and the portion of the cover has a relatively large thickness. As a result, at the time of clamping, the cover undergoes elastic deformation in the compressing direction and the o-ring is sunk in slightly, while the o-ring is pressed in the direction of the frame of the adjacent filter plate. This movement of the o-ring prevents the cover on the frame from suffering damages, as well as secures the hermeticityof the filtrating chamber during the clamping.

According to the present invention as described in Item (13), the hard tube is provided inside the discharge passage. Thus, even when high pressure is applied to the cover on the main body at the time of filtration, the hard tube prevents the cover from partially sinking into the discharge passage as a result of the elastic deformation. Therefore, it is possible to prevent rupture of a part of the cover at the time of filtration.

In general, when conducting dehydration using a filter press, a stronger stress is exerted around the supply port than in the other portions. According to the present invention as described in Item (14) or (19), it is possible to effectively prevent removal or breakage of the portion of the cover around the supply port.

According to the present invention as described in Items (15), (20), even when a shearing force and/or a tensile force are applied to the cover by the substance force-fed into the filtrating chamber, the reinforcing member in the cover prevents occurrence of breakage or rupture in the cover.

According to a filter press equipped with a plurality of filter plates manufactured by the method as described in the above-mentioned Item (21) or (22), while the filter plates are stacked one upon the other, the tips of the covered spacers provided on one filter plate abut the tips of the covered spacers on the adjacent filter plate, respectively, through the intermediation of the filter cloths. Due to this feature, while the filter plates stacked together are being clamped against each other, a pressure acting on the filter plates is received by the abutting spacers. This makes it possible to reduce a thickness of the main body of each filter plate as compared with that in the prior art, and thus a total weight of the filter plates of the filterpress is reduced. As a result, it becomes possible to manufacture a light weight and compact filter press at a low cost.

## BRIEF DESCRIPTION OF THE DRAWINGS

Fig. 1 is a view showing an outward appearance of a conventional filter press;

Fig. 2 is a sectional view showing filter plates with which the filter press in Fig. 1 is equipped;

Fig. 3 is a front view of a filter plate according to a first embodiment of the present invention, in which a filter cloth is partially omitted;

Fig. 4 is another front view of the filter plate, in which all of a cover, a net and the filter cloth shown in Fig. 3 are omitted;

Fig. 5 is an enlarged sectional view taken along the line V-V in Fig. 3, showing a portion around frames opposed to each other, in which a main body is sandwiched between the opposed frames;

Fig. 6 is an enlarged sectional view taken along the line V-V in Fig. 3, showing a portion around spacers opposed to each other;

Fig. 7 shows a relationship between the elastic modulus and shape factor of a urethane of a hardness of 95;

Fig. 8 is an enlarged perspective view of one of discharge passages of the filter plate shown in Fig. 4, in which the filter cloth and the net are omitted;
Fig. 9 is a more detailed perspective view of the discharge passage;
Fig. 10 is a sectional view taken along the line Z-Z in Fig. 3, which shows a portion around a hard tube embedded in the discharge passage;
Fig. 11 is a diagram showing an operation of a filter press equipped with a plurality of filter plates as shown in Fig. 3;
Fig. 12 is a front view of a filter plate of a second embodiment of the present invention, in which all of a cover, a filter cloth and a net are omitted;
Fig. 13 is an enlarged sectional view of the filter plate according to the second embodiment, which shows a portion around the frame;
Fig. 14 is an enlarged sectional view of a filter plate according to a third embodiment of the present invention, which shows a portion around a frame;
Fig. 15 is an enlarged sectional view of a filter plate according to a fourth embodiment according to the present invention, which shows a portion around a frame; and
Fig. 16 is an enlarged sectional view of a filter plate according to a fifth embodiment, which shows a portion around a supply hole.

## DESCRIPTION OF REFERENCE NUMERALS IN THE DRAWINGS

| | |
|---|---|
| 1: | Filter Press |
| 2: | Filtrating Chamber |
| 3: | Main Body |
| 4: | O-Ring |
| 5: | Frame |
| 6: | Spacer |
| 7: | Cover |
| 8: | Filter Cloth |
| 9: | Net |
| 11: | Conventional Filter Press |
| 12: | Base |
| 13: | Stand |
| 14: | Stand |
| 15: | Guide Rail |
| 16: | Hydraulic Cylinder |
| 17: | Supply Ports |
| 18: | Chute |
| 21: | Conventional Filter Plate |
| 22: | Guide Groove |
| 23: | Liquid Discharge Port |
| 24: | Main Body |
| 25: | Filter Cloth |
| 26: | Filtrating Chamber |
| 31: | Discharge Passage |
| 33: | Supply Hole |
| 35: | Slider |
| 37: | Hard Tube |
| 39: | Through-Hole |
| 51: | Welded Portion |
| 53: | Inner Edge Portion |
| 55: | Recess |
| 61: | Peripheral Edge Portion |
| 63: | Welded Portion |
| 71: | Opening |
| 73: | Reinforcing Net (Reinforcing Member) |

## PREFERRED EMBODIMENTS OF THE INVENTION

In the following, embodiments of the present invention will be described in detail with reference to the accompanying drawings.

## FIRST EMBODIMENT

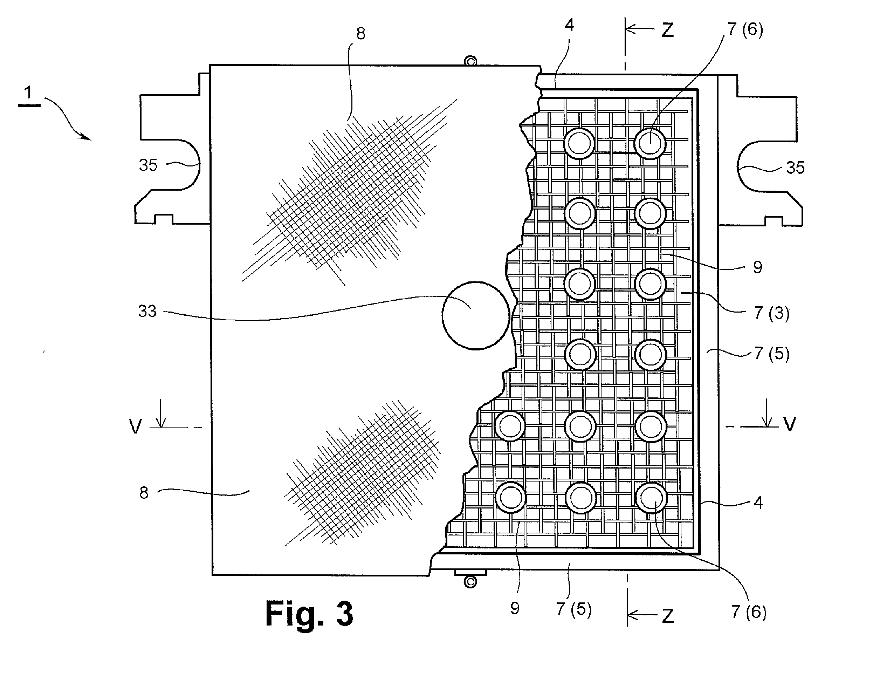

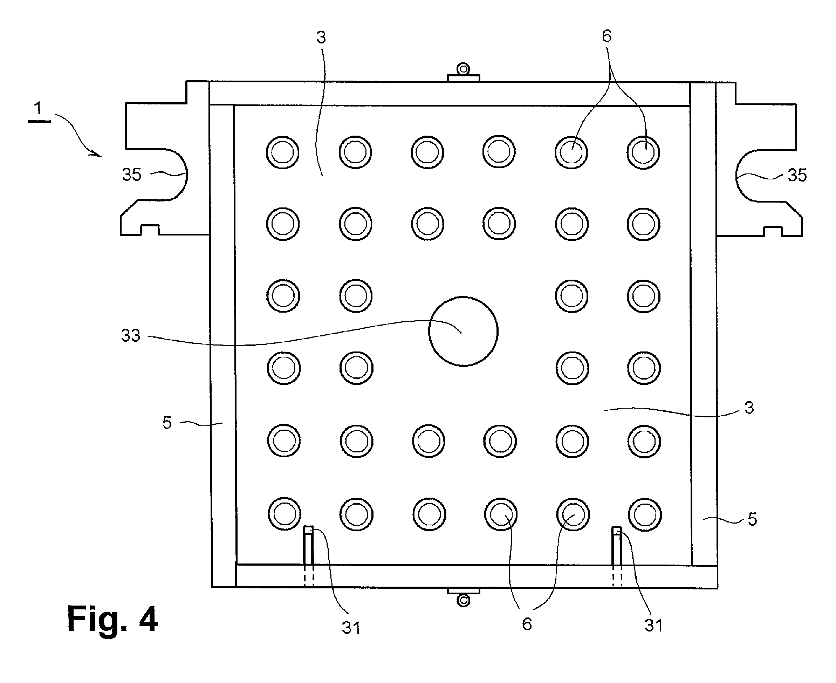

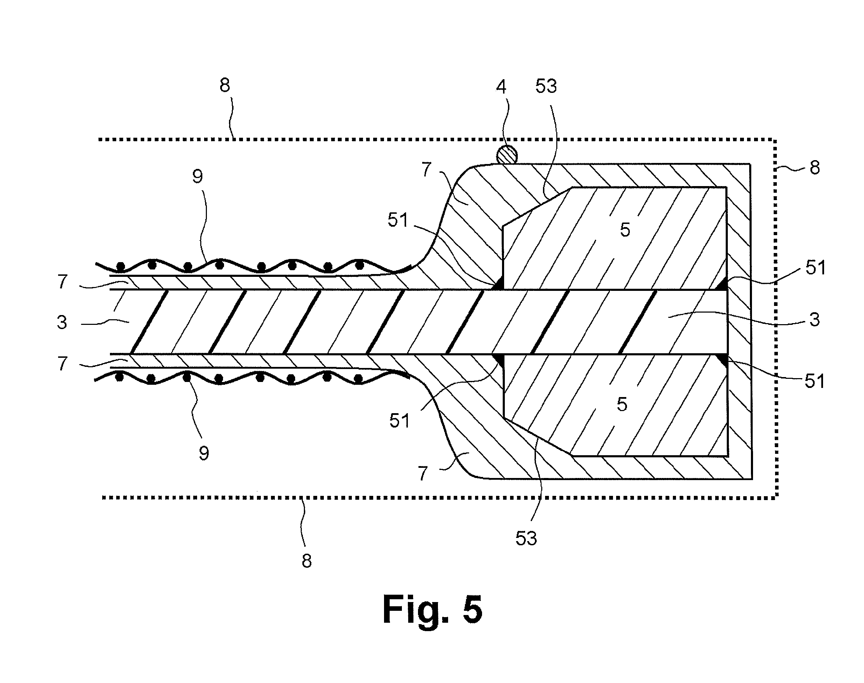

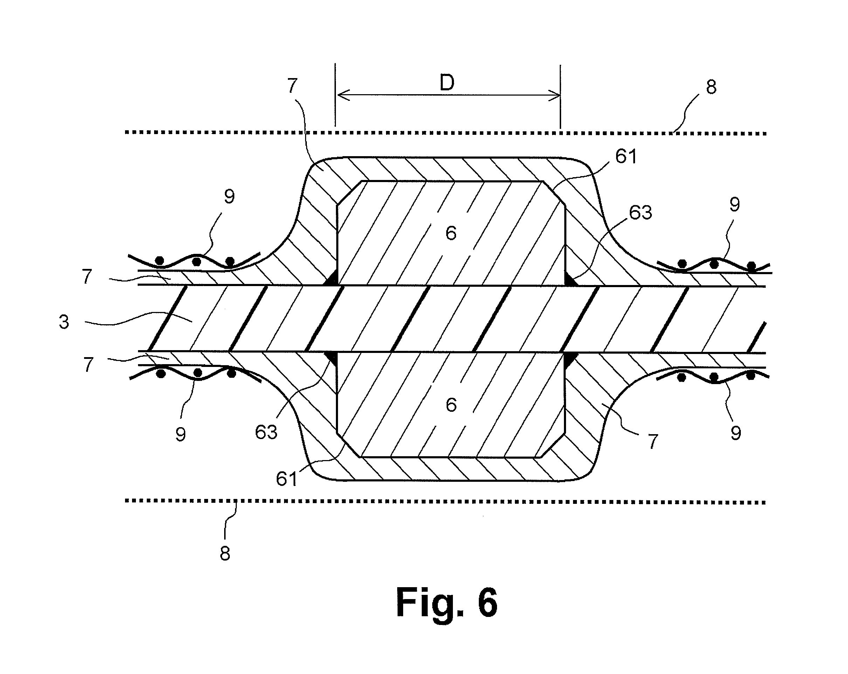

First, a filter plate according to a first embodiment of the present invention will be described with reference to Figs. 3 - 6. Fig. 3 is a front view of a filter plate 1 according to the first embodiment of the present invention, in which a filter cloth 8 is partially omitted. Fig. 4 is another front view of the filter plate 1, in which a cover 7, the filter cloth 8 and a net 9 shown in Fig. 3 are omitted. Fig. 5 is an enlarged sectional view taken along the line V-V in Fig. 3, showing a portion around frames 5, 5 opposed to each other, in which a main body 3 is sandwiched between the opposed frames. Fig. 6 is an enlarged sectional view taken along the line V-V in Fig. 3, showing a portion around spacers 6, 6 opposed to each other.

As shown in Figs. 3 - 6, the filter plate 1 of the present invention has a main body 3, which is a flat iron plate formed in a substantially square configuration; two frames 5 provided on both sides (i.e., a front side and a back side of a plane in Fig. 4) of the main body 3; a plurality of iron spacers 6 provided on both sides of the main body 3; a cover (covering member) 7 formed of an elastic material; two filter cloths 8 for filtrating "the substance to be dehydrated" such as sludge, which are provided on both sides of the main body 3; two discharge passages 31 for discharging the filtrate removed from the substance through the filter cloth 8 to the outside of the filter plate 1; and two nets 9 for guiding the filtrate passed through the filter cloth 8 to the discharge passages 31, which are provided on both sides of the main body 3.

There are no particular limitations regarding the kind of "the substance to be dehydrated"; specific examples thereof include dredging sludge, industrial waste water, and various kinds of sludge. There are no particular limitations regarding the kind of sludge; it may be organic sludge or inorganic sludge. Specific examples of the organic sludge include sewage sludge, leftover food sludge, and human waste sludge. Specific examples of the inorganic sludge include sludge exclusively containing an inorganic substance generated in, for example, an engineering work site, a water filtering plant, a mine, or a metal plating plant.

In this embodiment, the filter plate 1 has the same construction on both sides. Thus, the same components are provided so as to be opposed to each other with the main body 3 being sandwiched therebetween. In the following, only a construction of one side of the filter plate 1 will be described, and a description of a construction of the other side thereof will be omitted.

As shown in Fig. 4, substantially at a center of the flat-plate-like main body 3, there is formed a circular supply hole 33 for supplying "the substance to be dehydrated" into a filtrating chamber. The filtrating chamber is defined between adjacent filter plates of a filter press (see the filtrating chamber 26 of the conventional filter press shown in Fig. 2). As described below, a plurality of spacers 6 are arranged substantially at equal intervals around the supply hole 33. Further, the frame 5 is arranged in a peripheral edge portion of the main body 3 so as to surround the spacers 6. On the right and left sides of the main body 3, there are provided sliders 35 adapted to slide on guide rails of a filter press (see the guide rails 15 shown in Fig. 1).

As shown in Fig. 4, the frame 5 is formed by assembling together four iron rods of the same configuration and the same size and having a substantially rectangular sectional configuration. The frame 5 assembled is provided on the peripheral edge portion of the main body 3, and is welded thereto. In Fig. 5, the welded portions are indicated by reference numeral 51. As shown in Fig. 5, the frame 5 is provided so as to hold the main body 3 between itself and another frame 5 provided at the opposite side. It is desirable for the frame 5 used in the present invention to be machined such that an inner edge portion 53 thereof exhibits a sloping surface (or a curved surface) as shown in Fig. 5.

As shown in Fig. 4, the iron spacers 6 are provided at predetermined positions on the main body 3 at the inner side of the frame 5 but around the supply hole 33, and are welded to the main body 3. In Fig. 6, welded portions are indicated by reference numeral 63. It is desirable for the plurality of spacers 6 inside the frame 5 to be arranged over the entire surface of the main body 3 at substantially equal intervals.

All the spacers 6 used in this embodiment have the same configuration and dimensions; however, there are no particular limitations regarding the configuration and dimensions of the spacers 6. When a diameter D of an upper surface of each spacer 6 is approximately 3 cm or less, there is a fear of the spacers 6 being engaged and stucked in the cover 7 at the time of clamping to thereby damage the cover 7. On the other hand, when the diameter D of the upper surface of each spacer 6 is approximately 5 cm or more, a volume of the filtrating chamber becomes rather small, which is undesirable. In view of this, it is desirable for each spacer 6 to be formed substantially as a cylinder or a truncated cone whose upper surface has the diameter D of approximately 3 cm - 5 cm.

It is necessary for the spacers 6 to have a thickness which is substantially the same as the thickness of the frame 5. Further, as shown in Fig. 6, it is desirable for each spacer 6 to be machined such that a peripheral edge portion 61 thereof exhibits a sloping surface (or a curved surface).

The number of spacers, N, to be provided on each side of the main body 3 is determined by the following formula <1>:

$$N > P/(E \cdot A) \quad \ldots \langle 1 \rangle$$

where

N: the number of spacers to be provided on one side of the main body;
P: the pressure (kgf) in the clamping direction to be applied to the filter plate at the time of clamping ;
E: the elastic modulus (kgf/cm$^2$) of a cover to be formed on the top of a spacer; and
A: the area (cm$^2$) of portion of the cover to be formed on the top a spacer.

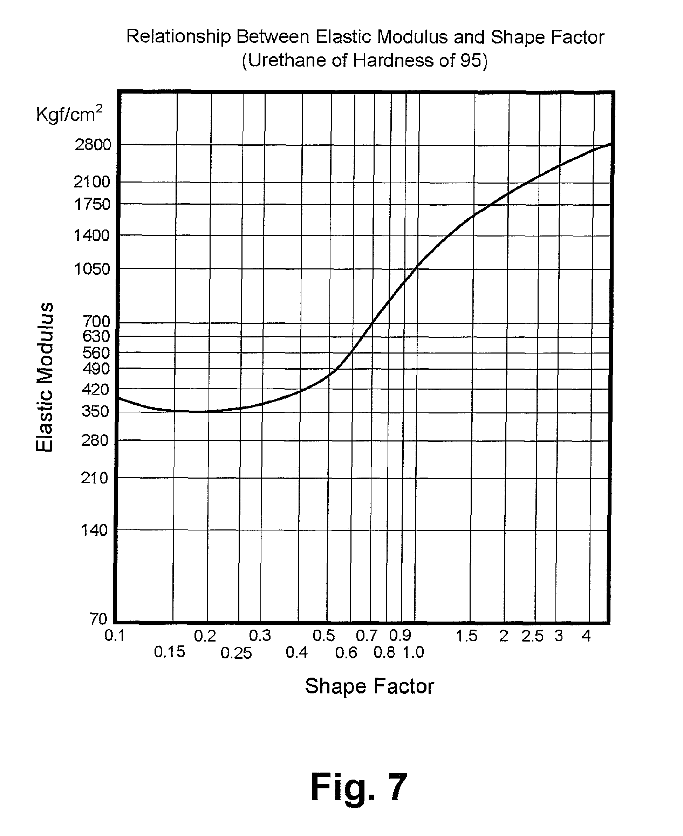

In the above-mentioned formula, the elastic modulus E of the cover is determined by the size of the cover to be formed on the top of a spacer. For example, in the case of providing the cover (formed of urethane of a hardness of 95) such that a covering part on the top of a spacer (with a diameter of about 3 cm) has a diameter of 5 cm and a thickness of 3 mm, the elastic modulus E of the covering part is approximately 2800 kgf/cm$^2$. This means that the cover has a compression strength of approximately 2800 kgf/cm$^2$ at the covering part on the top of the spacer. Thus, assuming that a plurality of filter plates are clamped with a pressure of 1296 t (40 kgf/cm$^2$), it is necessary to provide, in the above-mentioned case, 24 or more spacers on one side of the main body (i.e., 48 or more spacers on both surfaces thereof). Fig. 7 shows a relationship between the elastic modulus and shape factor of a urethane of a hardness of 95.

The cover 7 formed of an elastic material is provided so as to cover both surfaces of the main body 3 to which the frames 5 and the spacers 6 have been welded (see Figs. 5 and 6). As shown in Figs. 5 and 6, the cover 7 is formed such that undulated portions (i.e., rising and falling portions) thereof have a curved surface.

While there are no particular limitations regarding the kind of elastic material, it is desirable to employ urethane, in particular, a urethane of a hardness of 95. The cover 7 is preferably provided such that the portions thereof covering the upper surface of each spacer 6 have the compression strength of approximately 2800 kgf/cm$^2$. When, for example, a urethane of a hardness of 95 is used as the cover material, this compression strength can be achieved by providing the urethane on the top of each spacer in a diameter of approximately 5 cm and a thickness of approximately 3 mm (see Fig. 7). In this connection, it is to be noted that other elastic material (e.g., resin) maybe used instead of the urethane, if needed.

While there are no particular limitations regarding the method of providing the cover 7 made of an elastic material, it is desirable to adopt press working. In the case where the cover 7 is provided by the press working, the cover material is poured into the space between the main body to which the frames and the spacers have been welded and a mold formed in a predetermined shape and size. Then, the mold is pressed with high pressure against the main body, so that a cover having a predetermined size is quickly provided on the main body, the frame and the frames.

As shown in Figs. 3 and 5, on the cover 7 covering the frame 5, there is provided an O-ring 4 for securing hermeticity of the filtrating chamber while a plurality of filter plates 1 are clamped together. The O-ring 4 is arranged on the cover 7 to extend along the frame 5 so as to surround the region on the inner side of the frame 5 (that is, so as to surround the filtrating chamber). When using the frame 5 whose inner edge portion 53 exhibits a sloping surface or a curved surface (see Fig. 5), the O-ring 4 is arranged on the cover 7 to extend along the frame 5 so as to be situated above the inner edge portion 53. It is not necessary for the O-ring 4 to be provided on both sides of the filter plate 1; it suffices to provide it on only one side thereof.

The filter cloth 8 has a center hole facing the supply hole 33 of the main body 3 (see Fig. 3). The filter cloth 8 of the filter plate 1 shown in Fig. 3 is connected with another filter cloth provided on the back side of the main body 3. These filter cloths face each other across the main body 3, and are stitched together at the periphery of the main body 3 and at the periphery of the supply hole 33 so as to be formed into rectangular-doughnut-like shape. That is, the main body 3 equipped with the frames 5, the spacers 6, the cover 7, and the nets 9 is covered with two filter cloths except for the supply hole 33 and the sliders 35. The substance to be dehydrated, which is supplied into the filtrating chamber through the supply hole 33 shown in Fig. 3, is filtrated by the filter cloth 8 described above. There are no particular limitations regarding the kind of filter cloth; it is possible to use, for example, a filter cloth formed of fabric or non-woven fabric. However, from a viewpoint of securing a sufficient filtration area and preventing clogging, it is desirable to use a filter cloth formed of fabric.

The net 9 is formed of a hard resin, and has a large diameter hole facing the supply hole 33 of the main body 3 and small diameter holes for allowing a plurality of spacers 6 to pass therethrough. The net 9 is provided on the covered main body 3 at the inner side of the frame 5 (see Figs. 5 and 6).

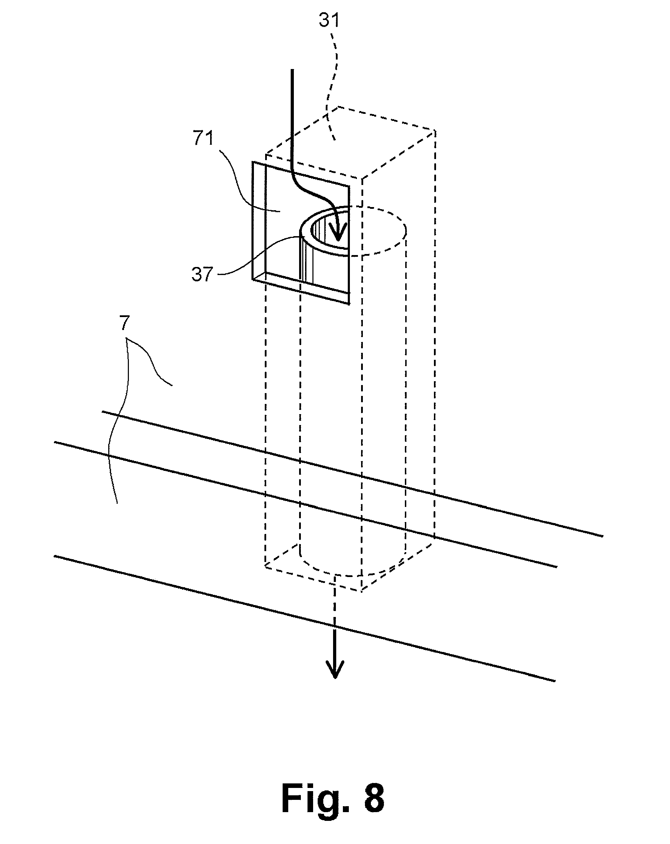

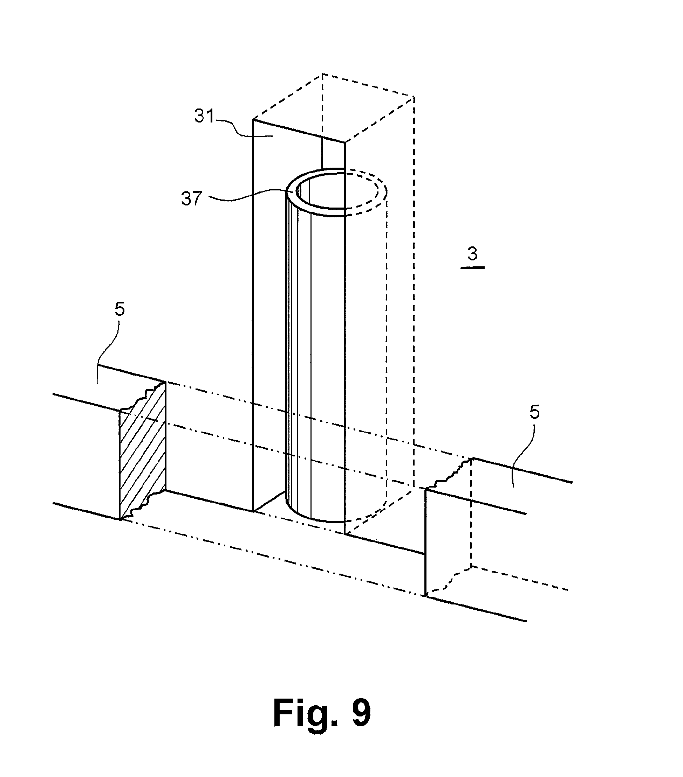

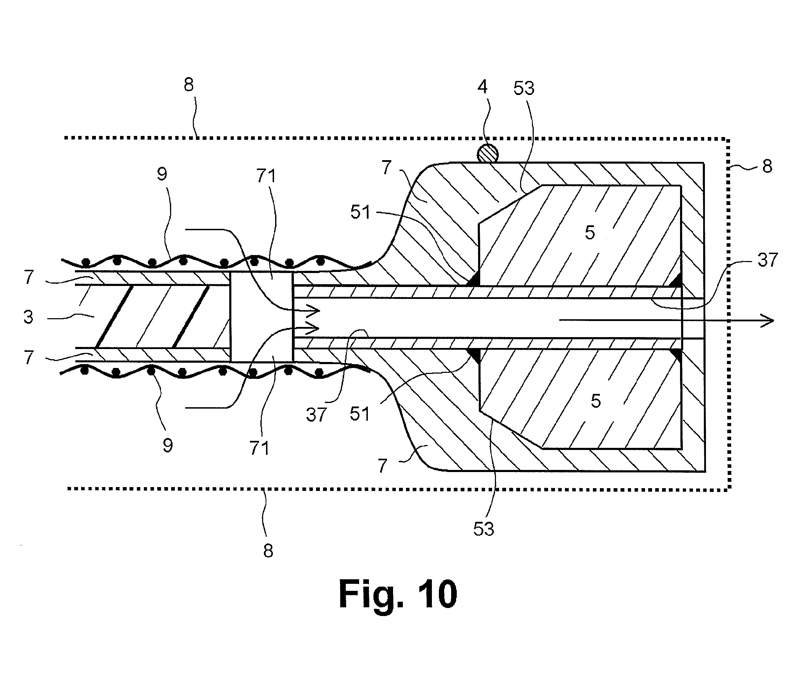

Next, a configuration of the discharge passages 31 will be described with reference to Figs. 4, 8 - 10. Fig. 8 is an enlarged perspective view of one of the discharge passages 31 of the filter plate 1 shown in Fig. 4, in which the filter cloth 8 and the net 9 are omitted. Fig. 9 is a more detailed perspective view of the discharge passage 31. Fig. 10 is a sectional view taken along the line Z-Z in Fig. 3, which shows a portion around a hard tube 37 embedded in the discharge passage 31.

As shown in Figs. 4 and 9, the slit-like discharge passages 31 are formed by cutting out an end of the main body 3. In each discharge passage 31, there is embedded the hard tube 37 whose length is smaller than that of the discharge passage. The frame 5 is provided in the peripheral edge portion of the main body 3 so as to traverse each discharge passage 31 in which the tube 37 has been embedded (see Figs. 9 and 10). Further, the main body 3 and the frame 5 are covered with the cover 7 so as to shield the discharge passage 31 as traversed by the frame 5 (see Fig. 8). As shown in Fig. 8, an opening 71 is formed in the cover 7 provided on the main body 3. The opening 71 is formed at a position where it faces the space between one end of the discharge passage 31 and one end of the tube 37. The opening 71 formed in the cover 7 communicates with the outside of the filter plate 1 through the discharge passage 31 and the tube 37 (see Fig. 10).

The construction of the filter plate of the present invention is as described above. It should be noted that the construction of the filter plate according to the present invention is not restricted to that of the above-mentioned embodiment. For example, the material for the main body 3, the frames 5, and the spacers 6 is not restricted to iron, but may be some other metal material (e.g., a resin such as plastic). Further, it is not always necessary for the main body 3, the frames 5, and the spacers 6 to be formed of the same material; they may also be formed of different materials.

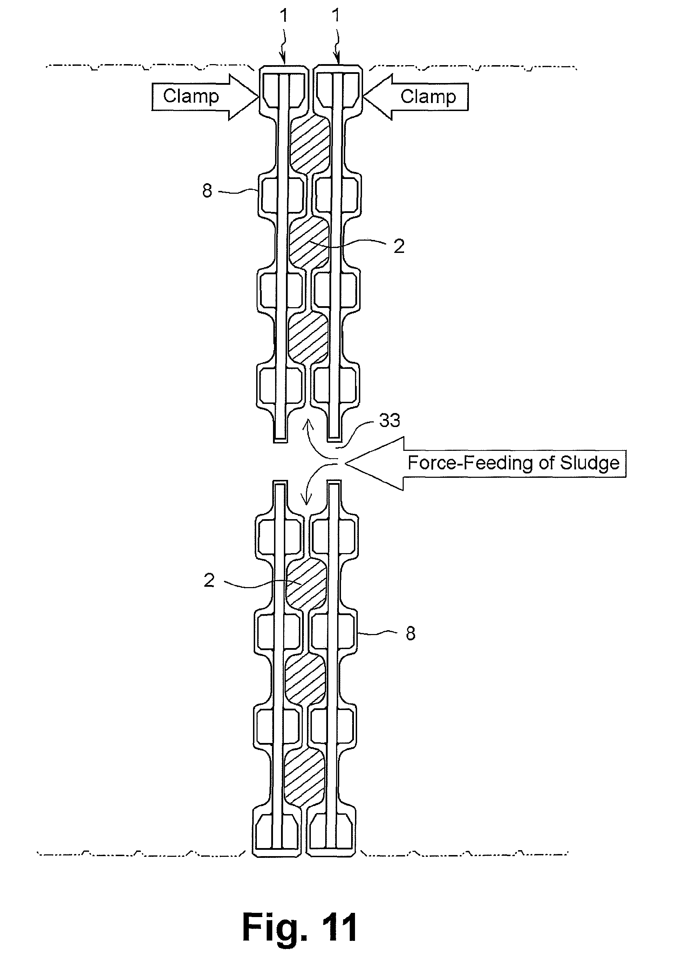

Next, an operation of a filter press equipped with a plurality of filter plates 1 will be described with reference to Figs. 11 and 1, in which the filter press is applied to a case of dehydrating sewage sludge as a substance to be dehydrated. Fig. 11 is a diagram showing an operation of a filter press equipped with a plurality of filter plates 1 as shown in Fig. 3.

When filtrating sewage sludge using the filter press, the plurality of filter plates 1 are first moved in the direction in which the plurality of filter plates 1 are brought close to each other using the hydraulic cylinder 16 provided on the stand 14 side (see Fig. 1), whereby the adjacent filter plates 1 are stacked one upon the other. Further, the filter plates 1 stacked together are clamped. In this state, filtrating chambers 2 covered with the filter cloths 8 are defined between the adjacent filter plates 1 (see Fig. 11). Further, as shown in Fig. 11, while the plurality of filter plates 1 are stacked together, the tips of the covered spacers 6 of one filter plate abut the tips of the covered spacers 6 of the adjacent other filter plate through the intermediation of the filter cloths 8.

When the plurality of filter plates 1 are clamped,

sewage sludge is supplied into the filtrating chambers 2 defined between the adjacent filter plates 1 through the supply holes 33. At this time, the sewage sludge is force-fed under high pressure using a special pump (not shown) . When the filtrating chambers 2 are filled with the sewage sludge, it is filtrated through the filter cloths 8 under the high pressure applied by the special pump. As a result, the sewage sludge is dehydrated with high pressure, and is separated into solid dehydrated cakes and a filtrate. The covers 7 are strongly pressed by the high pressure at the time of filtration; however, due to the hard tubes 37 embedded in the discharge passages 31, there is no fear of the covers 7 being sunk in the discharge passages 31.

The filtrate having passed through the filter cloths 8 moves on the nets 9 arranged on the covered main body 3, and is guided to the openings 71 of the covers 7 (see Fig. 8). Then, the filtrate having reached the openings 71 enters the discharge passages 31 through the openings, and is discharged to the outside of the filter plates 1 through the tubes 37 (see Fig. 10). The filtrate discharged through the discharge passages 31 is fed to a predetermined tank through the chute 18. When the filtration is completed, the hydraulic cylinder 16 is operated so as to move the filter plates 1 away from each other. Then, the dehydrated cakes remaining in the filtrating chambers 2 between the filter plates 1 are automatically peeled from the filter cloths 8 and falls by its own weight.

Next, effects achieved by the filter press equipped with the filter plates as described above will be described.

According to the filter press equipped with the filter plates 1, while the plurality of filter plates are stacked one upon the other, the tips of the covered spacers of one filter plate abut the tips of the covered spacers of the adjacent other filter plate through the intermediation of the filter cloths. Because of this feature, while the filter plates stacked together are being clamped, a pressure applied to the filter plates can be received by the spacers. As a result, it is possible to reduce the thickness of each main body as compared with that in the prior art, so it is possible to reduce the weight of the filter plate as a whole. Further, it is possible to produce a lightweight and compact filter press. Further, the filter plates can be produced at low cost, so it is possible to reduce the production cost of the filter press.

Further, by covering the spacers with an elastic material, it is possible to prevent corrosion, wear, etc. of the spacers. Further, no bare spacers abut each other directly through the intermediation of the filter cloths, so it is possible to prevent breakage of the filter cloths at the time of clamping of the filter plates.

Further, with the filter press equipped with the filter plates according to the present invention, it is possible to achieve the following superior effect.
First, if the spacers are not covered with covers, the spacers of the adjacent filter plates will abut each other directly through the intermediation of the filter cloths. Here, while it is desirable for the dimensions of the plurality of spacers of the filter plate (in particular, the dimension in the height direction) to be uniform, there is, in actuality, some dimensional error between the spacers. Thus, if there is a difference in the dimension in the height direction between the plurality of spacers, when the filter plates are clamped, the pressure is concentrated on a part of the spacers, resulting in breakage of the filter cloths.

In contrast, in the present invention, each of all the spacers are covered with an elastic material. Thus, even if there is a difference in the dimension in the height direction between the plurality of spacers, it is possible to adjust the height dimension of the covered spacers to uniform by virtue of the cover. Thus, when the filter plates are clamped, the pressure is applied to all the spacers substantially uniformly. Further, each spacer is covered with an elastically deformable material, so there is no fear of the filter cloths between the opposing spacers suffering breakage at the time of clamping.

## SECOND EMBODIMENT

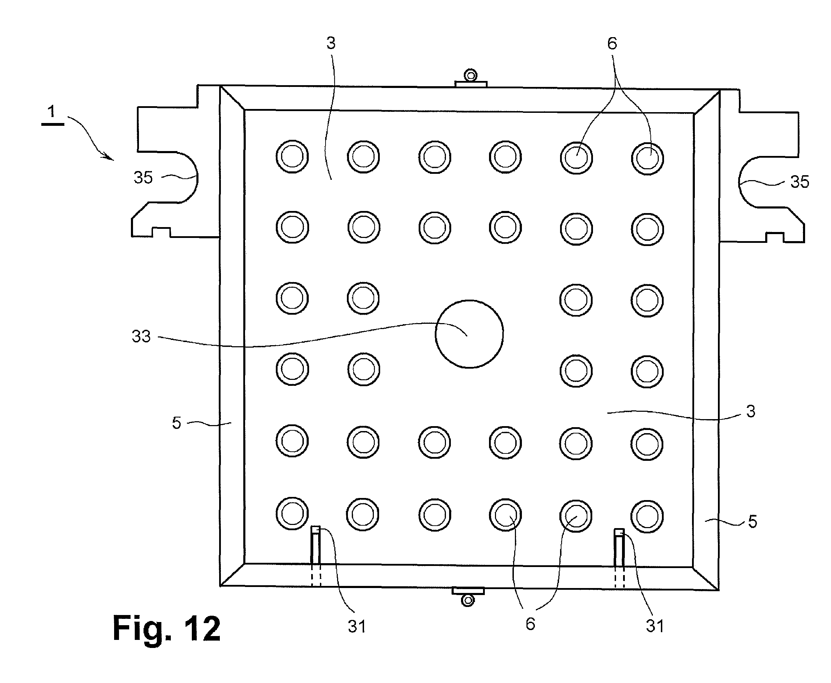

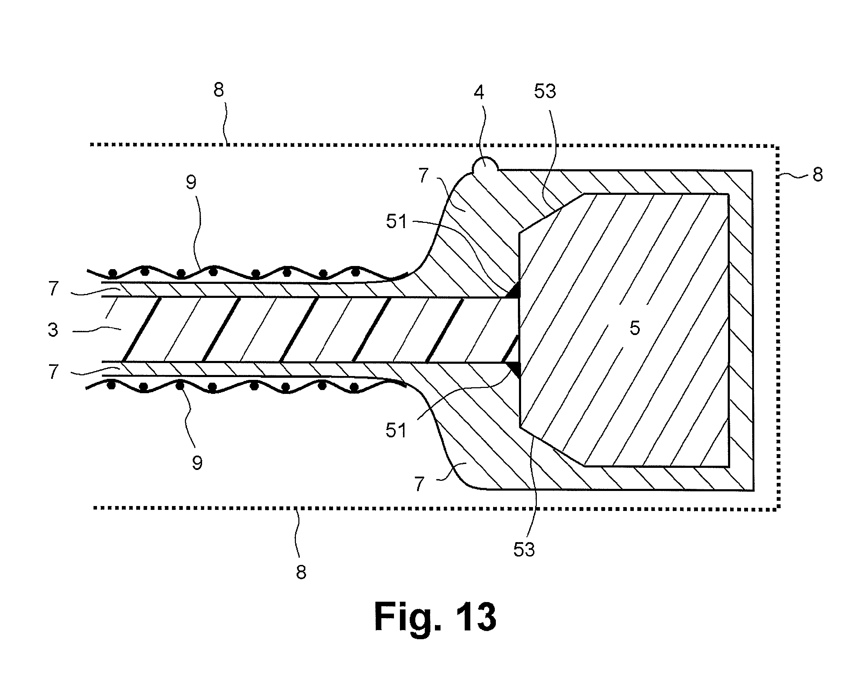

Next, a filter plate according to the second embodiment of the present invention will be described with reference to Figs. 12 and 13. Fig. 12 is a front view of the filter plate of the second embodiment of the present invention, in which the cover 7, the filter cloth 8 and the net 9 are omitted. Fig. 13 is an enlarged sectional view of the filter plate 1 according to the second embodiment, which shows a portion around the frame 5.
A description of the features that are the same as those of the first embodiment described above will be omitted, and the description will center only on main differences.

In the filter plate 1 of the second embodiment, the O-ring 4 is formed of the same material as that of the cover 7, and is integrally-molded with the cover 7. The frame 5 is formed by assembling together four rods having the same configuration and size. As shown in Figs. 12 and 13, the frame is provided so as to surround the periphery of the main body 3, and is welded thereto. In Fig. 13, the welded portions are indicated by reference numeral 51.

## THIRD EMBODIMENT

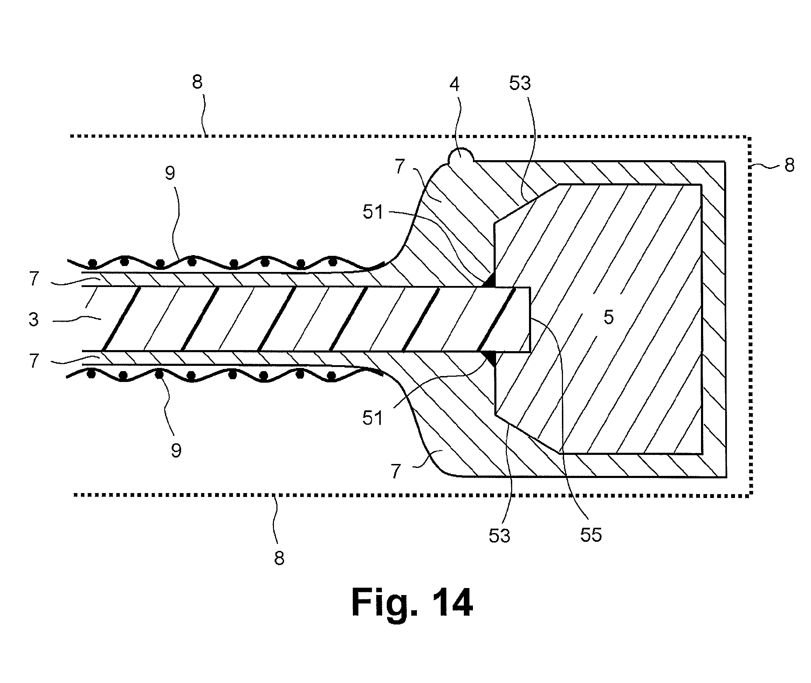

Next, a filter plate according to a third embodiment of the present invention will be described with reference to Fig. 14. Fig. 14 is an enlarged sectional view of the filter plate according to the third embodiment of the present invention, which shows the portion around the frame 5. A description of the features that are the same as those of the second embodiment described above will be omitted, and the description will center only on main differences.
In the filter plate of the third embodiment, a recess 55 is formed in each rod of the frame 5 so as to extend along a longitudinal direction thereof. As shown in Fig. 13, when welding the frame 5 to the main body 3, an end of the main body 3 is fitted into the recess 55.

## FOURTH EMBODIMENT

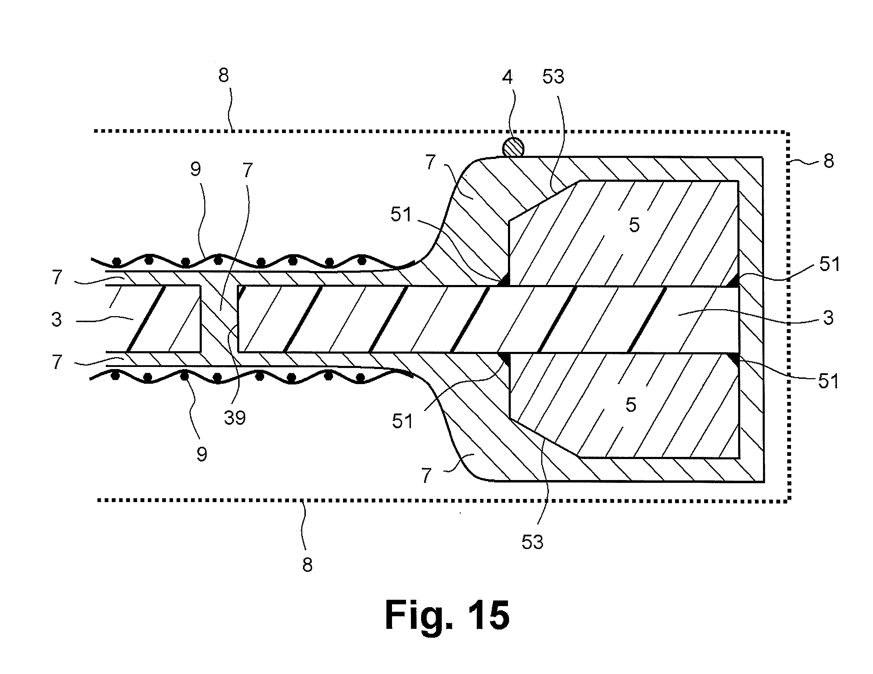

Next, a filter plate according to the fourth embodiment of the present invention will be described with reference to Fig. 15.

Fig. 15 is an enlarged sectional view of the filter plate according to the fourth embodiment according to the present invention, which shows the portion around the frame 5. A description of the features that are the same as those of the first embodiment described above will be omitted, and the description will center only on main differences.

In the filter plate of the fourth embodiment, a plurality of through-holes 39 are formed in the main body 3. The cover 7 is provided on either side of the main body 3 so as to be continuous through the through-holes 39. That is, respective portions of the cover 7 provided on both sides of the main body 3 are connected with each other by the cover material filling the plurality of through-holes 39. As a result, even when an external stress is applied to the filter plate, the cover 7 is prevented from being peeled from the main body 3.

## FIFTH EMBODIMENT

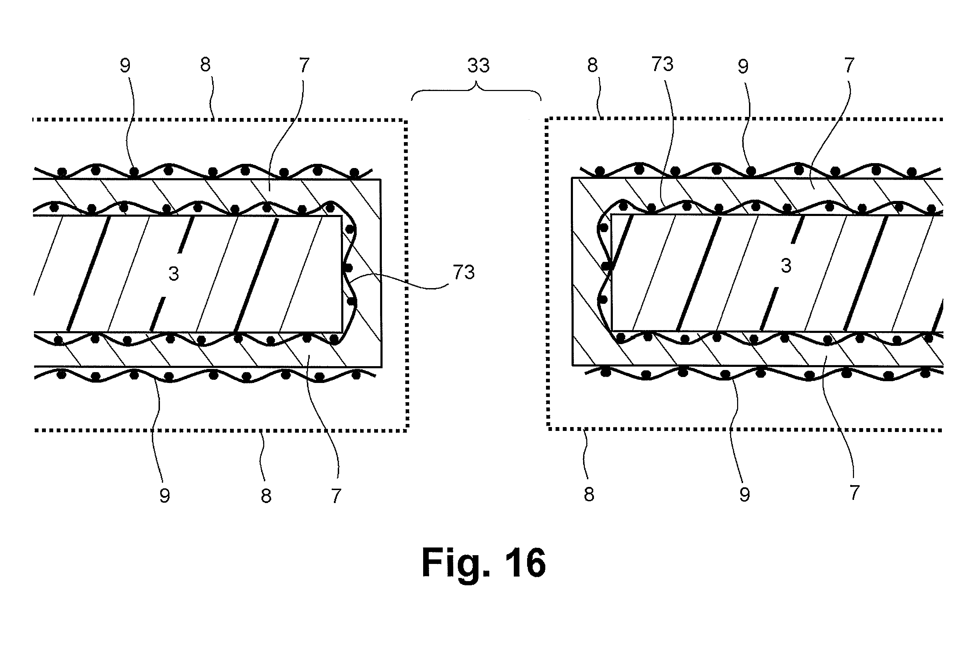

Next, a filter plate according to the fifth embodiment of the present invention will be described with reference to Fig. 16. Fig. 16 is an enlarged sectional view of the filter plate according to the fifth embodiment, which shows the portion around the supply hole 33. A description of the features that are the same as those of the first embodiment described above will be omitted, and the description will center only on main differences.

In the filter plate of the fifth embodiment, the cover 7 includes a reinforcing net (reinforcing member) 73 for reinforcing the cover. That is, the cover in this embodiment is formed from a set of the elastic material and the reinforcing net 73. As shown in Fig. 16, the cover 7 including the reinforcing net 73 is provided on both sides of the main body 3 so as to be continuous through the supply hole 33. There are no particular limitations regarding the kind of the reinforcing net 73; specific examples of the reinforcing net include a net formed of a resin or iron.

## APPLICATION EXAMPLE OF THE PRESENT INVENTION

While the above-mentioned technique related to a filter plate is applied to a filter press for filtrating a substance to be dehydrated, such as sewage sludge, the technique is also applicable to other technical fields. For example, a plurality of molds corresponding to the filter plates are prepared and arranged so as to be opposed to each other as shown in Fig. 1, and are clamped in the manner as shown in the figure; further, resin is poured in place of the substance to be dehydrated, whereby it is possible to simultaneously produce a plurality of moldings of a predetermined configuration. In this case, by arranging, between the plurality of adjacent molds, filter plate bodies equipped with frames, it is possible to simultaneously provide covers of a predetermined configuration on a plurality of main bodies.

## INDUSTRIAL APPLICABILITY

The present invention is suitable for providing a filter plate and a method of manufacturing the same enabling manufacture of a lightweight and compact filter press at low cost.

## Claims

1. A filter plate of a filter press used for filtrating a substance tobedehydrated, inwhichthe filterpress is provided withaplurality of filter plates, and when filtrating the substance, the filter plates of the filter press are stacked together and clamped against each other so that filtrating chambers are defined between adjacent filter plates, the filter plate comprising:

   a main body having a supply hole through which the substance is supplied into a filtrating chamber defined between the filter plate and another filter plate adjacent thereto;
   a frame provided at a peripheral edge portion of the main body;
   a plurality of spacers provided on the main body at the inner side of the frame;
   a cover formed of an elastic material which is provided so as to cover at least the plurality of spacers;
   a filter cloth for filtrating the substance which has been force-fed into the filtrating chamber through the supply hole, wherein tips of the covered spacers provided on the filter plate abut tips of covered spacers on the adjacent filter plate through the intermediation of the filter cloth, respectively, during the clamping of the filter plates; and
   at least one discharge passage fordischarginga filtrate passed through the filter cloth to the outside of the filter plate.

2. The filter plate as claimed in Claim 1, wherein a number of spacers to be provided on the main body is determined by a formula of N > P/(E·A), in the formula:

   N: the number of spacers to be provided on one side of the main body;
   P: pressure (kgf) in a clamping direction to be applied to the filter plate at the time of clamping;
E: elastic modulus ($kgf/cm^2$) of the cover to be formed on the top of each spacer; and
A: area ($cm^2$) of the cover to be formed on the top of each spacer.

3. The filter plate as claimed in Claim 1, wherein:

each of the spacer is formed into a cylinder or a truncated cone shape whose upper surface has a diameter of approximately 3 cm - 5 cm;
the cover is formed of urethane having a hardness of 95;
each spacer is covered with the urethane so that the cover lying on the top thereof has elastic modulus of approximately 2800 $kgf/cm^2$; and
a number of spacers to be provided on the main body is determined by a formula of N > P/(2800·A), in the formula:
N: the number of spacers to be provided on one side of the main body;
P: pressure (kgf) in a clamping direction to be applied to the filter plate at the time of clamping;
A: area ($cm^2$) of the cover to be formed on the top of each spacer.

4. The filter plate as claimed in Claim 1, wherein the plurality of spacers provided inside the frame are arranged over the entire surface of the main body at substantially equal intervals.

5. The filter plate as claimed in Claim 1, wherein the frame and the plurality of spacers are welded onto the main body.

6. The filter plate as claimed in Claim 5, wherein the main body is formed into a substantially square shape, and the frame is formed by assembling together four rods having a same configuration.

7. The filter plate as claimed in Claim 1, wherein the cover is provided so as to cover the main body and the frame in addition to the plurality of spacers.

8. The filter plate as claimed in Claim 7, wherein the cover is provided such that rising and falling portions thereof have a curved surface.

9. The filter plate as claimed in Claim 7, wherein the cover is provided through press working.

10. The filter plate as claimed in Claim 7, wherein the filter plate further comprises an O-ring for securing hermeticity of the filtrating chamber during the clamping of the filter plates, the 0-ring being arranged on the cover above the frame so as to extend along the frame.

11. The filter plate as claimed in Claim 7, wherein the frame is formed such that an inner edge portion thereof has a sloping or curved surface, and each of the spacers is formed such that a peripheral edge portion thereof has a sloping or curved surface.

12. The filter plate as claimed in Claim 11, wherein the O-ring extending along the frame is arranged on the cover so as to be situated above the inner edge portion of the frame having the sloping or curved surface.

13. The filter plate as claimed in Claim 7, wherein the discharge passage is formed by cutting out an end of the main body, and in the discharge passage there is embedded a hard tube for preventing the cover from sinking into the discharge passage.

14. The filter plate as claimed in Claim 7, wherein the cover is provided on both sides of the main body so as to be continuous through the supply hole of the main body.

15. The filter plate as claimed in Claim 1, wherein the cover includes a reinforcing member for reinforcing the cover.

16. A filter plate of a filter press used for filtrating a substance to be dehydrated, in which the filterpress is provided with a plurality of filter plates, and when filtrating the substance, the filter plates of the filter press are stacked together and clamped against each other so that filtrating chambers are defined between adj acent filter plates, the filter plate comprising:

a main body having a supply hole through which the substance is supplied into a filtrating chamber defined between the filter plate and another filter plate adjacent thereto;
a frame provided so as to surround the periphery of the main body;
a plurality of spacers provided on the main body;
a cover formed of an elastic material which is provided so as to cover at least the plurality of spacers;
a filter cloth for filtrating the substance which has been force-fed into the filtrating chamber through the supply hole, wherein tips of the covered spacers provided on the filter plate abut tips of covered spacers on the adjacent filter plate through the intermediation of the filter cloth, respectively, during the clamping of the filter plates; and
at least one discharge passage for discharging a filtrate passed through the filter cloth to the outside of the filter plate.

**17.** The filter plate as claimed in Claim 16, wherein a number of spacers to be provided on the main body is determined by a formula of N > P/(E.A), in the formula:

N: the number of spacers to be provided on one side of the main body;

P: pressure (kgf) in a clamping direction to be applied to the filter plate at the time of clamping;

E: elastic modulus ($kgf/cm^2$) of the cover to be formed on the top of each spacer; and

A: area ($cm^2$) of the cover to be formed on the top of each spacer.

**18.** The filter plate as claimed in Claim 16, wherein the cover is provided so as to cover the main body, the frame and the plurality of spacers.

**19.** The filter plate as claimed in Claim 16, wherein the cover is provided on both sides of the main body so as to be continuous through the supply hole of the main body.

**20.** The filter plate as claimed in Claim 16, wherein the cover includes a reinforcing member for reinforcing the cover.

**21.** A method of manufacturing a filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adjacent filter plates, the method comprising the steps of:

preparing a main body having a plate-like shape;

welding a first frame onto a peripheral edge portion of one side of the main body;

welding a second frame onto a peripheral edge portion of the other side of the main body, so that the first and second frames are opposed to each other with the main body being sandwiched therebetween;

welding a first set of spacers onto the one side of the main body so as to be arranged at the inner side of the first frame;

welding a second set of spacers onto the other side of the main body so as to be arranged at the inner side of the second frame, so that the first and second sets of spaces are opposed to each other with the main body being sandwiched therebetween; and

providing a cover formed of an elastic material so as to cover at least the spacers provided onto the main body.

**22.** A method of manufacturing a filter plate of a filter press used for filtrating a substance to be dehydrated, in which the filter press is provided with a plurality of filter plates, and when filtrating the substance, the filter plates of the filter press are stacked together and clamped against each other so that filtrating chambers are defined between adjacent filter plates, the method comprising the steps of:

preparing a main body having a plate-like shape;

welding a frame onto the periphery of the main body so as to surround the main body;

welding a first set of spacers onto one side of the main body;

welding a second set of spacers onto the other side of the main body, so that the first and second sets of spaces are opposed to each other with the main body being sandwiched therebetween; and

providing a cover formed of an elastic material so as to cover at least the spacers provided onto the main body.

EP 1 759 752 A1

Fig. 1

Fig. 2

14

Fig. 3

Fig. 4

**Fig. 5**

Fig. 6

Relationship Between Elastic Modulus and Shape Factor
(Urethane of Hardness of 95)

Fig. 7

31

71

37

7

Fig. 8

31

37

3

5

5

# Fig. 9

EP 1 759 752 A1

**Fig. 10**

**Fig. 11**

Fig. 12

Fig. 13

**Fig. 14**

Fig. 15

**Fig. 16**

EP 1 759 752 A1

## INTERNATIONAL SEARCH REPORT

| | International application No. |
|---|---|
| | PCT/JP2005/006629 |

**A. CLASSIFICATION OF SUBJECT MATTER**
Int.Cl⁷ B01D25/12

According to International Patent Classification (IPC) or to both national classification and IPC

**B. FIELDS SEARCHED**

Minimum documentation searched (classification system followed by classification symbols)
Int.Cl⁷ B01D25/12

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-189718 A (Toufuku Kabushiki Kaisha), 11 July, 2000 (11.07.00), (Family: none) | 1-22 |
| A | JP 9-276613 A (Toufuku Kabushiki Kaisha), 28 October, 1997 (28.10.97), (Family: none) | 1-22 |
| A | JP 8-10356 Y2 (Kabushiki Kaisha Kurita Kikai Seisakusho), 29 March, 1996 (29.03.96), Fig. 3 (Family: none) | 1-22 |

| ☒ | Further documents are listed in the continuation of Box C. | ☐ | See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 May, 2005 (10.05.05) | 24 May, 2005 (24.05.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/006629 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 56-19988 A (Kobe Steel, Ltd.), 25 February, 1981 (25.02.81), Claims; Figs. 1, 3 (Family: none) | 5,6 |

Form PCT/ISA/210 (continuation of second sheet) (January 2004)